# EUROPÄISCHE PATENTSCHRIFT

(11) **EP 0 933 558 B1**
(45) Veröffentlichungstag und Bekanntmachung des Hinweises auf die Patenterteilung: **09.04.2003**
(21) Anmeldenummer: 99101287.3
(22) Anmeldetag: 25.01.1999
(51) Int. Cl.: F16H 3/00, F16H 3/093

(54) **Kraftfahrzeug-Stufengetriebe**
Stepped automotive gearbox
Boîte de vitesses à rapports étagés de véhicule automobile

(30) Priorität: 26.01.1998 DE 19802820
(43) Veröffentlichungstag der Anmeldung: 04.08.1999
(73) Patentinhaber: GETRAG Getriebe- und Zahnradfabrik Hermann Hagenmeyer GmbH & Cie KG, 74199 Untergruppenbach (DE)
(72) Erfinder: Rühle, Günter, 74369 Löchgau (DE); Seufert, Martin, 71229 Leonberg (DE)
(74) Vertreter: Witte, Alexander, Dr.-Ing.

(56) Entgegenhaltungen:
- WO-A-92/04558
- WO-A-97/33103
- FR-A- 2 719 355
- US-A- 5 603 242

## Beschreibung

Die Erfindung betrifft ein Kraftfahrzeug-Stufengetriebe in Vorgelegebauart mit einer von einer Motorausgangswelle über eine Trennkupplung antreibbaren Getriebeeingangswelle, mit einer in Verlängerung der Getriebeeingangswelle angeordneten Getriebeausgangswelle sowie mit einer zur Getriebeausgangswelle parallelen Vorgelegewelle, mit einer Mehrzahl von Radsätzen zum Einstellen von Gängen des Getriebes, wobei Radsätze jeweils ein Losrad umfassen und die Losräder über Schaltkupplungen zum Einlegen von Gängen mit einer sie tragenden Welle drehfest verbindbar sind, während ein Radsatz eines weiteren Ganges über eine Reibungskupplung schaltbar ist, und schließlich zum Vermindern eines Schaltrucks während eines Gangwechsels die Reibungskupplung beim Betätigen einer der Schaltkupplungen in Eingriff bringbar ist, wobei ferner ein Zahnrad des Radsatzes des weiteren Ganges auf einer zur Getriebeausgangswelle parallel angeordneten Nebenwelle angeordnet ist, wobei eine Drehmomentverbindung von der Motorausgangswelle über die Reibungskupplung zu dem Radsatz des weiteren Ganges herstellbar ist, und wobei der weitere Gang der zweite Gang ist.

Ein Stufengetriebe der vorstehend genannten Art ist aus der US 5603242 A bekannt.

Bei Kraftfahrzeuggetrieben unterscheidet man zwischen sogenannten Lastschaltgetrieben einerseits und Getrieben mit Zugkraftunterbrechung andererseits. Lastschaltgetriebe sind üblicherweise als Planetengetriebe mit vorgeschaltetem hydrodynamischem Wandler ausgebildet. Durch Betätigen von Kupplungen und Bremsen für die einzelnen Elemente des Planetengetriebes werden die Gänge eines solches Lastschaltgetriebes in zeitlicher Überschneidung geschaltet, so daß während eines Gangwechsels keine Unterbrechung der Zugkraft vom Motor zu den Räder des Kraftfahrzeuges auftritt.

Bei Getriebe mit Zugkraftunterbrechung, bspw. herkömmlichen Kraftfahrzeug-Stufengetrieben in Vorgelegebauweise, wird hingegen der Kraftfluß bei jedem Gangwechsel zunächst im alten Gang aufgetrennt und dann im neuen Gang wieder geschlossen, so daß während des Gangwechsels eine Unterbrechung der Zugkraft eintritt. Diese Unterbrechung macht sich als Schaltruck bemerkbar, der insbesondere beim Hochschalten von niedrigeren in höhere Gänge störend sein kann, wenn das Fahrzeug infolge der Zugkraft-Unterbrechung "nickt".

Im Rahmen der Automatisierung von Schaltgetrieben mit Zugkraftunterbrechung hat man versucht, den Schaltruck dadurch zu vermindern, daß man zwei konzentrisch angeordnete und baulich vereinigte Reibungskupplungen eingesetzt hat, um jeweils eine erste oder eine zweite Gruppe von Gängen des Getriebes mit dem Ausgang des Antriebsmotors zu verbinden. Diese Getriebe werden üblicherweise als Doppelkupplungsgetriebe bezeichnet. Ein Beispiel eines derartigen Doppelkupplungsgetriebes ist in der DE 38 12 359 A1 beschrieben.

Bei einer Variante derartiger Doppelkupplungsgetriebe, wie sie bspw. in der DE 44 01 812 A1 beschrieben ist, aber auch in der DE 40 31 851 A1, der DE 195 48 622 C1 und der DE 31 31 139 C2, ist die Doppelkupplung zwar ebenfalls als Bauteil mit koaxialer Anordnung der beiden Kupplungen in einem gemeinsamen Kupplungsgehäuse ausgeführt, die Funktionsweise ist jedoch gegenüber dem weiter oben geschilderten Prinzip herkömmlicher Doppelkupplungsgetriebe etwas anders. Bei diesen Getrieben wird nämlich über eine. der beiden Reibungskupplungen der Doppelkupplung nur der jeweils höchste Gang, bspw. der sechste Gang (DE 44 01 812 A1) betätigt, und zwar während jedes Schaltvorganges. Dies hat zur Folge, daß während eines Schaltvorganges, bei dem in herkömmlichen Stufengetrieben mit Zugkraftunterbrechung der Kraftfluß zwischen Motor und Getriebeausgang vollständig unterbrochen wird, noch eine gewisse Drehmomentverbindung über den höchsten Gang vorhanden ist.

Bei dieser Bauart von Getrieben wird zwar der Schaltruck geringfügig vermindert, der auf diese Weise erzielte Gewinn an Komfort muß jedoch durch einen beträchtlichen konstruktiven Aufwand erkauft werden.

Darüber hinaus haben Getriebe dieser Bauart den systematischen Nachteil, daß nur das kleinste zur Verfügung stehende Moment, nämlich das Moment des höchsten Ganges auf den Abtrieb gebracht werden kann. Bei einem Hochschalten vom ersten in den zweiten Gang, wo sich die Komforteinbußen durch einen Schaltruck am meisten bemerkbar machen, wirkt sich dies nur geringfügig aus, weil der Zugkrafteinbruch im ersten Gang nur minimal reduziert wird. Erst beim Schalten in noch höhere Gänge wirkt sich die Einschaltung des höchsten Ganges während des Schaltvorganges mehr und mehr aus.

Weiterhin haben diese bekannten Getriebe den Nachteil, daß für die gewünschte Überbrückung des Moments die Kupplung für den höchsten Gang während des gesamten Schaltvorganges im Schlupfbetrieb arbeitet. Dies führt insbesondere bei zahlreichen Schaltvorgängen (Stadtverkehr) zu einem hohen Verschleiß und damit einer geringen Lebensdauer der Kupplung. Dies gilt insbesondere auch deswegen, weil die Differenzdrehzahl in der im Schlupfbetrieb laufenden Kupplung des höchsten Ganges bei Schaltungen in den unteren Gängen groß ist und erst bei Schaltungen in den oberen Gängen geringer wird. Da im Stadtverkehr jedoch häufig in den unteren Gängen geschaltet wird, bspw. bei jedem Anfahren an einer Kreuzung oder einer Verkehrsampel, wirkt sich dies ebenfalls nachteilig auf Verschleiß und Lebensdauer der Kupplung des höchsten Ganges aus.

Aus der DE 38 12 327 C2 ist ein Doppelkupplungsgetriebe bekannt, bei dem mit der einen der beiden Kupplungen der erste Gang und mit der anderen Kupplung der zweite Gang geschaltet werden kann. Mit diesem bekannten Getriebe kann bei Schließen beider Kupplungen mit gleichzeitig eingelegtem ersten und zweiten Gang angefahren werden. Wenn die Drehzahlen an den Kupplungen gleich groß sind, wird der Kraftfluß durch die Kupplung des ersten Ganges aufgetrennt, z.B. mittels eines Freilaufes. Auf diese Weise kann bei extremen Anfahrvorgängen die Verlustleistung auf die beiden Kupplungen verteilt werden.

Die WO 97/33103 betrifft ein Stufengetriebe für Nutzfahrzeuge. Eingangsseitig ist eine Naß-Doppelkupplung angeordnet, die alternierend betätigt wird und mit zwei konzentrisch angeordneten Getriebeeingangswellen gekoppelt ist. Ferner weist das Getriebe zwei Vorgelegewellen auf. Eine der Vorgelegewellen weist eine zentrale Synchronisierungseinrichtung auf, die zwei Synchronräder beinhaltet. Eines der Synchronräder ist formschlüssig mit der Vorgelegewelle verbindbar, so daß das Synchronrad als Schaltrad für einen Zusatzgang (z.B. Kriechgang oder Overdrive) dienen kann.

Ein Getriebekonzept gemäß dem Oberbegriff des Anspruchs 1 ist bekannt aus der eingangs genannten US-A-5,603,242. Das Getriebe weist eine eingangsseitige Doppelkupplung auf, die mit zwei Getriebeeingangswellen verbunden ist. Zwei Vorgelegewellen sind konzentrisch zueinander angeordnet. Eine Schaltsteuereinrichtung weist einen Motor auf, der zwischen den konzentrischen Vorgelegewellen angeschlossen ist, um während Gangwechseln die relativen Drehzahlen der Vorgelegewellen aufrecht zu erhalten.

Wie klassischerweise bei Doppelkupplungsgetrieben üblich, sind dem einen Kraftübertragungszweig die geraden und dem anderen Kraftübertragungszweig die ungeraden Gänge zugeordnet.

Der Erfindung liegt demgegenüber die Aufgabe zugrunde, ein Stufengetriebe der eingangs genannten Art dahingehend weiterzubilden, daß bei geringstmöglichem konstruktiven Aufwand und ohne Einbuße an Lebensdauer eine deutliche Komfortverbesserung in den für das Auftreten des Schaltrucks besonders wichtigen Gängen erreicht wird.

Diese Aufgabe wird erfindungsgemäß dadurch gelöst, daß der weitere Gang (2.) als einziger über die Reibungskupplung (82) schaltbar ist.

Die der Erfindung zugrunde liegende Aufgabe wird auf diese Weise vollkommen gelöst.

Durch das Vorsehen eines zweiten Pfades zur Drehmomentverteilung vom Motor her ist man nämlich in der weiteren konstruktiven Auslegung frei. Dies gilt sowohl hinsichtlich der verwendeten Reibungskupplung, die nicht notwendigerweise Bestandteil einer herkömmlichen Doppelkupplung sein muß, wie auch hinsichtlich der Wahl und der Positionierung desjenigen Ganges, in den das vom Eingang her verzweigte Drehmoment eingeleitet wird. Man kann daher in vorteilhafter Weise von nahezu unveränderten Standardgetrieben ausgehen und muß diese lediglich durch einige zusätzliche Komponenten ergänzen.

Die Maßnahme, daß der weitere Gang der zweite Gang ist, vermeidet die weiter oben im einzelnen erläuterten Nachteile des Standes der Technik, weil durch das zusätzliche Einschalten des zweiten Ganges während des Schaltvorganges ein erheblicher Teil des Momentes über das Getriebe geleitet wird, so daß der Schaltruck dadurch deutlich vermindert werden kann. Darüber hinaus gestattet die Einschaltung einer Reibungskupplung in den Kraft- bzw. Momentenfluß des zweiten Ganges, die hinsichtlich eines Auftretens von Schaltruck besonders empfindlichen niedrigeren Gänge im Wege einer reinen Lastschaltung zu wechseln, bei der also überhaupt keine Zugkraftunterbrechung eintritt.

Die Maßnahme, daß der weitere Gang als einziger über die Reibungskupplung schaltbar ist, bedeutet einen geringst-möglichen Außwand.

Wie bereits erwähnt wurde, kann die Reibungskupplung sowohl in an sich bekannter Weise als Teil einer Doppelkupplung ausgebildet und dort mit der üblichen Trennkupplung im Getriebeeingang baulich vereinigt sein. Alternativ ist aber auch möglich, die Reibungskupplung auf der Nebenwelle anzuordnen und zum Verbinden eines als Losrad ausgebildeten und auf der Nebenwelle laufenden Zahnrades des Radsatzes des weiteren Ganges vorzusehen.

Diese Maßnahme hat den Vorteil, daß der Getriebeeingang überhaupt nicht modifiziert zu werden braucht, weil die herkömmliche Trennkupplung im Getriebeeingang erhalten bleiben kann und lediglich für eine Momentenverbindung zwischen der Motorausgangswelle und der Nebenwelle gesorgt werden muß, z.B. über einen einfachen Radsatz. Da die Reibungskupplung in diesem Fall auf der Nebenwelle angeordnet ist, hat man hinsichtlich ihrer konstruktiven Ausgestaltung auch alle denkbaren Freiheitsgrade.

Bei einer weiteren bevorzugten Gruppe von Ausführungsbeispielen ist eines der Zahnräder des Radsatzes des weiteren Ganges als auf der Nebenwelle laufendes Losrad ausgebildet, und es ist eine Kupplung zum drehfesten Verbinden dieses Zahnrades mit der Nebenwelle vorgesehen. Die Kupplung kann dabei alternativ als eine mittels einer Schiebemuffe betätigbare Schaltkupplung oder aber auch als Reibungskupplung ausgebildet sein.

Diese Maßnahme hat den Vorteil, daß die Elemente des Nebenpfades für das Drehmoment, d.h. die auf der Nebenwelle laufenden Elemente, dann, wenn sie nicht für einen Schaltvorgang benötigt werden, entkoppelt sind, so daß sie nicht mit hohen Drehzahlen umlaufen. Auf diese Weise wird ein frühzeitiger Verschleiß der Reibungskupplung vermieden, weil diese nur noch während der Schaltvorgänge mitläuft und selbstverständlich dann, wenn der ihr zugeordnete Gang geschaltet ist.

Bei weiteren Ausführungsformen der Erfindung sind alle Losräder auf der Getriebeausgangswelle angeordnet.

Diese Maßnahme hat den Vorteil, daß einfache, herkömmliche Konstruktionen verwendet werden können.

In diesem Falle ist bevorzugt, wenn ein Zahnrad des Radsatzes des weiteren Ganges als Festrad auf der Getriebeausgangswelle angeordnet ist. Insbesondere können die Radsätze der Gänge in diesem Fall, vom Getriebeeingang her gesehen, in der Reihenfolge 5.-6.-2.-4.-3.-1.-R angeordnet sein.

Diese Maßnahme hat den Vorteil, daß eine besonders zweckmäßige Anordnung der Gänge erreicht wird.

Alternativ kann aber auch bei anderen Ausführungsformen der Erfindung eine erste Anzahl von Losrädern auf der Getriebeausgangswelle und eine zweite Anzahl von Losrädern auf der Vorgelegewelle angeordnet sein.

Diese Maßnahme hat den Vorteil, daß möglicherweise eine noch kompaktere Bauart des Getriebes entsteht, weil die platzaufwendigen Schiebemuffenanordnungen auf die Getriebeausgangswelle und auf die Vorgelegewelle verteilt sind.

Die beiden vorstehend genannten Ausführungsformen von Getrieben bedingen naturgemäß eine ebenso unterschiedliche Aufteilung der Schaltstangen und Schaltgabeln nebst gegebenenfalls zugehörigen fremdkraftbetätigten Aktuatoren.

Bei der zweiten Gruppe von Ausführungsbeispielen ist die Anordnung zweckmäßigerweise so gewählt, daß die Radsätze des weiteren Ganges und eines anderen Ganges ein Zahnrad gemeinsam haben. Dieses gemeinsame Zahnrad sitzt vorzugsweise auf der Getriebeausgangswelle und ist weiter vorzugsweise als Festrad ausgebildet.

Diese Maßnahme hat den Vorteil, daß eine Radsatzebene eingespart wird, so daß sich die Baulänge entsprechend vermindert.

In diesem Falle ist ferner bevorzugt, wenn die Radsätze der Gänge, vom Getriebeeingang her gesehen, in der Reihenfolge 5.-6.-2./3.-4.-1.R angeordnet sind.

Schließlich ist bevorzugt, wenn in an sich bekannter Weise zum Anfahren die Kupplungen des ersten und des zweiten Ganges gleichzeitig betätigbar sind.

Weitere Vorteile ergeben sich aus der Beschreibung und der beigefügten Zeichnung.

Es versteht sich, daß die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Ausführungsbeispiele der Erfindung sind in der Zeichnung dargestellt und werden in der nachfolgenden Beschreibung näher erläutert. Es zeigen:
- Fig. 1: ein Getriebeschema eines ersten Ausführungsbeispiels eines erfindungsgemäßen Kraftfahrzeug-Stufengetriebes;
- Fig. 2: eine Darstellung ähnlich Fig. 1, jedoch für ein zweites Ausführungsbeispiel der Erfindung;
- Fig. 3: eine Darstellung ähnlich Fig. 1, jedoch für ein drittes Ausführungsbeispiel der Erfindung; und
- Fig. 4: eine Darstellung ähnlich Fig. 1, jedoch für ein viertes Ausführungsbeispiel der Erfindung.

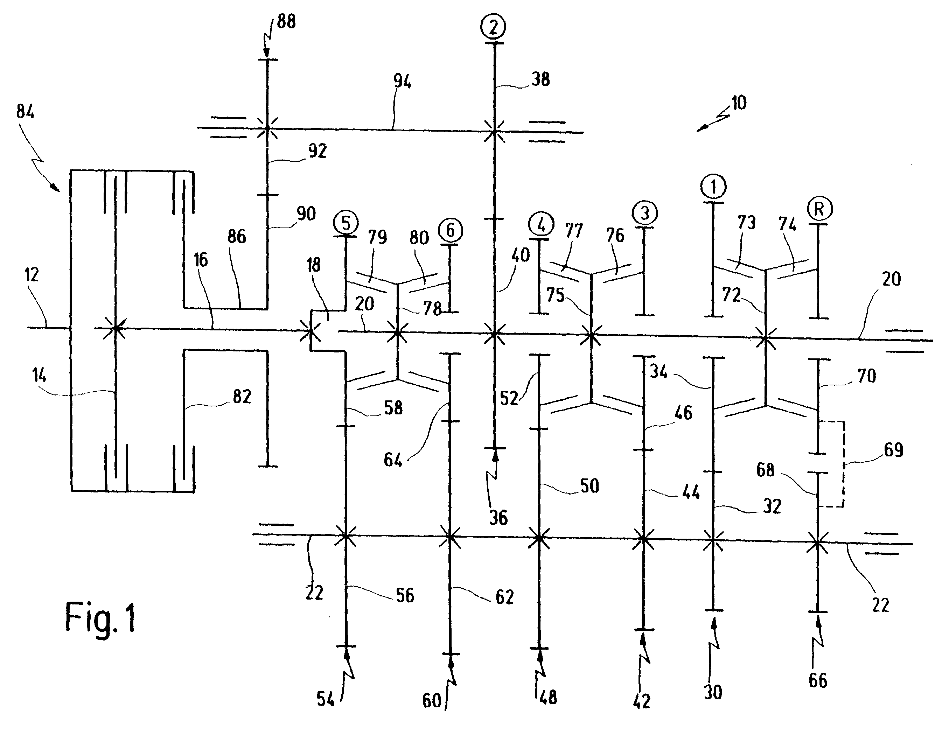

In Fig. 1 bezeichnet 10 insgesamt ein Ausführungsbeispiel des erfindungsgemäßen Kraftfahrzeug-Stufengetriebes. Bei dem Getriebe 10 ist mit 12 noch eine Motorausgangswelle angedeutet, die über eine übliche Trennkupplung 14 im Getriebeeingang mit einer Getriebeeingangswelle 16 verbunden ist. Die Getriebeeingangswelle 16 ist an ihrem in der Figur rechten Ende mit einem Lager 18 versehen, das zur Aufnahme einer Getriebeausgangswelle 20 dient, die sich in Verlängerung der Getriebeeingangswelle 16 erstreckt. Parallel zur Getriebeausgangswelle 20 ist eine Vorgelegewelle 22 angeordnet. Insoweit ist das Getriebe 10 von herkömmlicher Bauart eines Vorgelegegetriebes.

Auf der Getriebeausgangswelle 20 bzw. der Vorgelegewelle 22 befinden sich ein erster Radsatz 30 für den ersten Gang mit Zahnrädern 32 und 34. Ein zweiter Radsatz 36 für den zweiten Gang wird durch Zahnräder 38 und 40 gebildet. Ein dritter Radsatz 42 mit Zahnrädern 44 und 46 ist ebenso auf der Getriebeausgangswelle 20 bzw. der Vorgelegewelle 22 angeordnet wie ein vierter Radsatz 48 für den vierten Gang mit Zahnrädern 50 und 52, ein fünfter Radsatz 54 für den fünften Gang mit Zahnrädern 56 und 58, ein sechster Radsatz 60 für den sechsten Gang mit Zahnrädern 62 und 64 sowie schließlich ein siebter Radsatz 66 für den Rückwärtsgang mit einem Zahnrad 68, einem Umkehrrad 69 sowie einem Zahnrad 70.

Die Zahnräder 34, 46, 52, 58, 64 und 70 sind dabei als Losräder ausgebildet, die auf der Getriebeausgangswelle 20 sitzen, während die Zahnräder 32, 44, 50, 56, 62 und 68 als Festräder auf der Vorgelegewelle 22 angeordnet sind.

Zum Einlegen des ersten Ganges bzw. des Rückwärtsganges dient eine erste Schiebemuffe 72 mit Schaltkupplungen 73 und 74. Zum Einlegen des dritten bzw. des vierten Ganges dient eine zweite Schiebemuffe 75 mit Schaltkupplungen 76 und 77. Zum Einlegen des fünften bzw. des sechsten Ganges schließlich dient eine dritte Schiebemuffe 78 mit Schaltkupplungen 79 und 80.

Wie man ferner erkennt, ist eine Reibungskupplung 82 konzentrisch und axial neben der Trennkupplung 14 angeordnet, wobei die Kupplungen 14, 82 gemeinsam eine Doppelkupplung 84 bilden können. Die Reibungskupplung 82 ist mit einer Hohlwelle 86 verbunden, die die Getriebeeingangswelle 16 koaxial umgibt. Von der Hohlwelle 86 führt ein achter Radsatz 88 mit Zahnrädern 90 und 92 zu einer Nebenwelle 94, die sich parallel zu den Wellen 12, 16 und 22 erstreckt. Die Nebenwelle 94 trägt als Festrad das Zahnrad 38 des zweiten Radsatzes 36 für den zweiten Gang, dessen anderes Zahnrad 40 als Festrad auf der Getriebeausgangswelle 20 angeordnet ist.

Das Stufengetriebe 10 gemäß Fig. 1 arbeitet wie folgt:

Beim Anfahren des Kraftfahrzeuges wird zunächst in herkömmlicher Weise durch Betätigen der ersten Schiebemuffe 72 die erste Schaltkupplung 73 geschlossen und damit das als Losrad ausgebildete Zahnrad 34 des ersten Radsatzes 30 drehfest mit der Getriebeausgangswelle 20 verbunden. Durch langsames Schließen der Trennkupplung 14 wird nun das Antriebsmoment des Motors von der Motorausgangswelle 12 über die Trennkupplung 14 auf die Getriebeeingangswelle 16 geleitet und von dort über den fünften Radsatz 54 auf die Vorgelegewelle 22, von wo es über den ersten Radsatz 30 wieder auf die Getriebeausgangswelle 20 gelangt.

Wird nun vom ersten Gang in den zweiten Gang hochgeschaltet, so wird die Reibungskupplung 82 geschlossen. Dadurch wird das Drehmoment überschneidend von der Trennkupplung 14 auf die Reibungskupplung 82 übergeben. Zu einem bestimmten Zeitpunkt ist infolge der sich einstellenden Drehzahlen der Drehmomentenpfad des ersten Ganges lastlos, so daß der erste Gang durch Verschieben der ersten Schiebemuffe 72 und Öffnen der ersten Schaltkupplung 73 wieder herausgenommen werden kann. In entsprechender Weise kann dann zum Hochschalten vom zweiten auf den dritten Gang durch Verschieben der zweiten Schiebemuffe 75 die dritte Schaltkupplung 76 geschlossen und gleichzeitig die Trennkupplung 14 ebenfalls wieder geschlossen werden. Dann wird der Drehmomentenpfad für den zweiten Gang lastlos, so daß die Reibungskupplung 82 wieder geöffnet werden kann.

Insgesamt können damit Lastschaltungen vom ersten in den zweiten, vom zweiten in den dritten, vom dritten in den zweiten und vom zweiten wieder in den ersten Gang dargestellt werden, und es wird auf diese Weise das Auftreten eines Schaltrucks vermieden. Die auftretenden Drehzahldifferenzen sind sehr gering, so daß sich nur ein geringer Verschleiß infolge geringer Verlustleistung einstellt. Die Betätigung der Kupplungen bzw. Schiebemuffen kann dabei sehr einfach ausgeführt werden.

Alternativ kann aber auch von Anfang an mit geschlossenen Kupplungen 14 und 82 für den ersten und den zweiten Gang angefahren werden. Durch anschließendes Öffnen einer der beiden Kupplungen 14, 82 kann dann entweder im ersten Gang weitergefahren oder gleich in den zweiten Gang hochgeschaltet werden.

Beim Schalten der übrigen Gänge, nämlich der höheren Gänge 4., 5. und 6. sowie des Rückwärtsganges tritt in herkömmlicher Weise eine Zugkraftunterbrechung auf. Diese ist jedoch nahezu unmerklich, weil die übertragenen Drehmomente entsprechend gering sind.

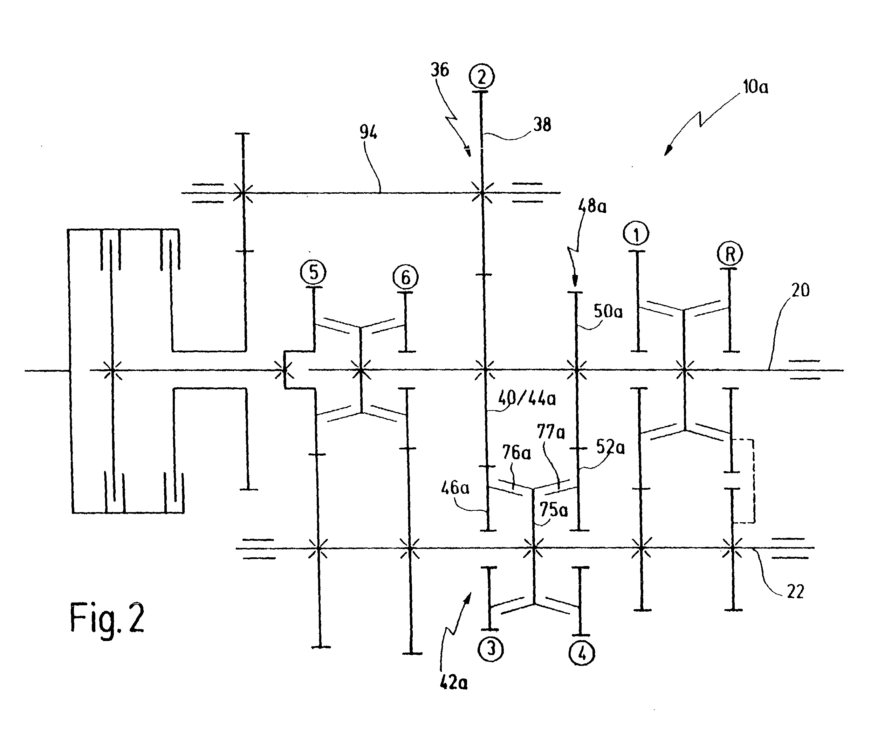

Bei einer Variante des Getriebes, wie sie mit 10a in Fig. 2 dargestellt ist, sind die Verhältnisse insoweit abgewandelt, als die Losräder 46a für den dritten Gang und 52a für den vierten Gang nunmehr auf der Vorgelegewelle 22 sitzen, die auch die zweite Schiebemuffe 75a mit ihren Schaltkupplungen 76a, 77a trägt. Eine weitere Besonderheit besteht darin, daß der dritte Radsatz 42a für den dritten Gang nunmehr in derselben Radsatzebene wie der zweite Radsatz 36 für den zweiten Gang liegt. In diesem Falle sitzt auf der Getriebeausgangswelle 20 ein als Festrad ausgebildetes Zahnrad 40/44a, das als gemeinsames Zahnrad sowohl dem zweiten Radsatz 36 wie auch dem dritten Radsatz 42 zugehörig ist. Der vierte Radsatz 48a mit seinen Zahnrädern 50a, 52a für den vierten Gang ist ansonsten unverändert, abgesehen davon, daß sich die Positionen der Zahnräder 50a, 52a auf der Getriebeausgangswelle 20 bzw. der Vorgelegewelle 22 vertauscht haben.

Das Getriebe 10a gemäß Fig. 2 hat folglich eine geringere axiale Baulänge, weil gegenüber dem Ausführungsbeispiel gemäß Fig. 1 eine Radsatzebene entfallen ist. Allerdings sind in diesem Falle die Schiebemuffen mit den zugehörigen Betätigungseinrichtungen (Schaltgabeln, Schaltstangen, Aktuatoren) auf zwei Wellen verteilt.

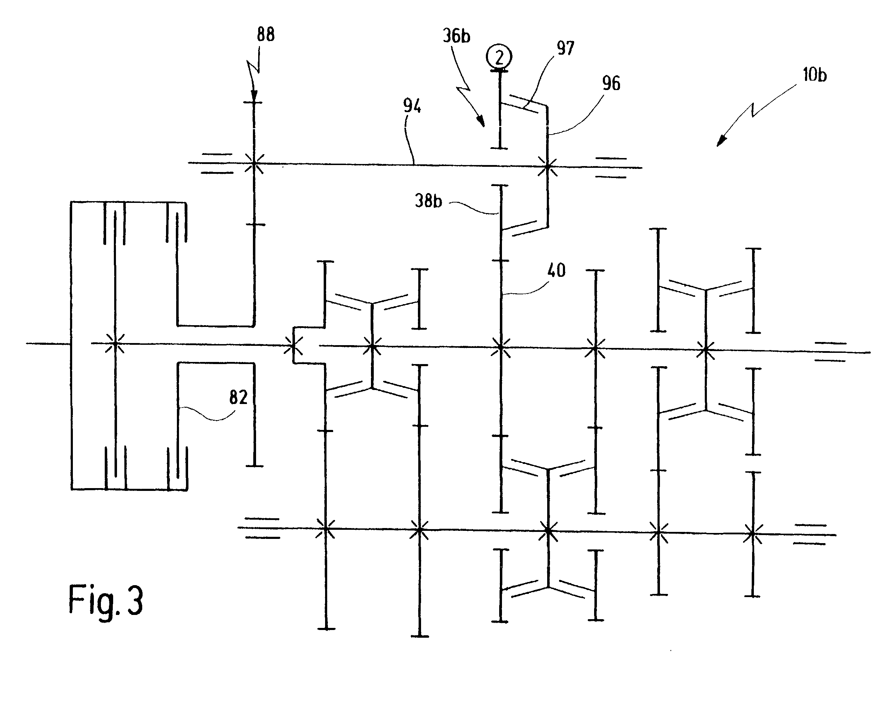

Bei einem dritten Ausführungsbeispiel 10b eines Stufengetriebes, wie es in Fig. 3 dargestellt ist, wird auf die Getriebeanordnung gemäß Fig. 2 zurückgegriffen. Eine Besonderheit besteht beim Getriebe 10b darin, daß das auf der Nebenwelle 94 sitzende Zahnrad 38b des zweiten Radsatzes 36b für den zweiten Gang als Losrad ausgebildet ist. Zum drehfesten Verbinden des Zahnrades 38b mit der Nebenwelle 94 dient eine vierte Schiebemuffe 96 mit Schaltkupplung 97. Diese Maßnahme hat den Sinn, die hohen Drehzahlen zu vermeiden, die bei der Auslegung des Pfades von der Reibungskupplung 82 in kleineren Gängen auftreten. Wird nämlich die Schaltkupplung 97 geöffnet, so läuft nur das Zahnrad 38b, während die Nebenwelle 94 leer läuft und damit auch die von ihr über den achten Radsatz 88 angetriebene Reibungskupplung 82.

Es versteht sich dabei, daß anstelle der Schiebemuffe 96 mit Schaltkupplung 97 auch ein entsprechender Freilauf vorgesehen werden kann, der zweckmäßigerweise schaltbar sein sollte.

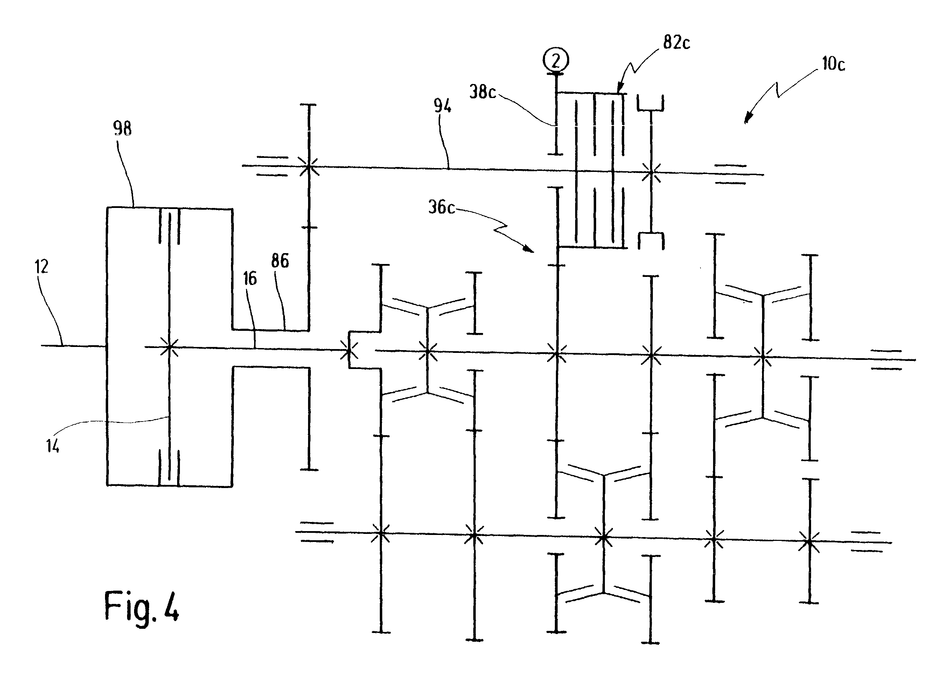

Schließlich zeigt Fig. 4 noch ein viertes Ausführungsbeispiel 10c eines derartigen Getriebes, dessen Konfiguration weitgehend demjenigen von Fig. 2 und 3 entspricht. Das Getriebe 10c unterscheidet sich davon durch folgende Besonderheiten:

Zunächst ist das Zahnrad 38c des zweiten Radsatzes 36c für den zweiten Gang wiederum als Losrad auf der Nebenwelle 94 ausgebildet. Zum drehfesten Verbinden des Zahnrades 38c mit der Nebenwelle 94 dient jedoch in diesem Falle die Reibungskupplung 82c, die bei dem in Fig. 4 dargestellten Ausführungsbeispiel 10c des Getriebes vom Getriebeeingang an diese Stelle verlegt wurde. Folglich ist bei diesem Ausführungsbeispiel 10c die Trennkupplung 14 als herkömmliche Einzelkupplung ausgebildet, bei der lediglich das mit der Motorausgangswelle 12 umlaufende Kupplungsgehäuse 98 mit der Hohlwelle 86 verbunden ist.

Im übrigen entspricht die Funktion des Getriebes 10c gemäß Fig. 4 derjenigen des Getriebes 10 gemäß Fig. 1.

Es versteht sich, daß die in den Figuren dargestellten Betätigungselemente für die Kupplungen und Schiebemuffen hydraulisch, pneumatisch, elektromechanisch, elektromagnetisch oder sonstwie fremdkraftbetätigt sein können. Ferner können die Getriebe in herkömmlicher Längsbauweise oder auch in Front-Quer-Bauweise ausgeführt sein.

## Patentansprüche

1. Kraftfahrzeug-Stufengetriebe in Vorgelegebauart mit einer von einer Motorausgangswelle (12) über eine Trennkupplung (14) antreibbaren Getriebeeingangswelle (16), mit einer in Verlängerung der Getriebeeingangswelle (16) angeordneten Getriebeausgangswelle (20) sowie mit einer zur Getriebeausgangswelle (20) parallelen Vorgelegewelle (22), mit einer Mehrzahl von Radsätzen (30, 36, 42, 48, 54, 60, 66) zum Einstellen von Gängen (1., 2., 3., 4., 5., 6., R) des Getriebes (10), wobei Radsätze (30, 42, 48, 54, 60, 66) jeweils ein Losrad (34, 46, 52, 58, 64, 70) umfassen und die Losräder (34, 46, 52, 58, 64, 70) über Schaltkupplungen (73, 74, 76, 77, 79, 80) zum Einlegen von Gängen (1., 3., 4., 5., 6., R) mit einer sie tragenden Welle (20; 22) drehfest verbindbar sind, wobei ein Radsatz (36) eines weiteren Ganges (2.) über eine Reibungskupplung (82) schaltbar ist, und schließlich zum Vermindern eines Schaltrucks während eines Gangwechsels die Reibungskupplung (82) beim Betätigen einer der Schaltkupplungen (73, 74, 76, 77, 79, 80) in Eingriff bringbar ist, wobei ein Zahnrad (38) des Radsatzes (36) des weiteren Ganges (2.) auf einer zur Getriebeausgangswelle (20) parallel angeordneten Nebenwelle (94) angeordnet ist, und wobei eine Drehmomentverbindung von der Motorausgangswelle (12) über die Reibungskupplung (82) zu dem Radsatz (36) des weiteren Ganges (2.) herstellbar ist, wobei der weitere Gang der zweite Gang (2.) ist, **dadurch gekennzeichnet, daß** der weitere Gang (2.) als einziger über die Reibungskupplung (82) schaltbar ist.

2. Getriebe nach Anpruch 1, **dadurch gekennzeichnet, daß** die Trennkupplung (14) und die Reibungskupplung (82) als Doppelkupplung (84) baulich vereinigt sind.

3. Getriebe nach Anspruch 2, **dadurch gekennzeichnet, daß** die Reibungskupplung (82) auf eine Hohlwelle (86) der Doppelkupplung (84) arbeitet und daß ein Radsatz (88) die Hohlwelle (86) mit der Nebenwelle (94) verbindet.

4. Getriebe nach Anspruch 1, **dadurch gekennzeichnet, daß** die Reibungskupplung (82c) auf der Nebenwelle (94) angeordnet und zum Verbinden eines als Losrad ausgebildeten und auf der Nebenwelle (94) laufenden Zahnrades (38c) des Radsatzes (36c) des weiteren Ganges (2.) vorgesehen ist.

5. Getriebe nach einem oder mehreren der Ansprüche 1 bis 3, **dadurch gekennzeichnet, daß** eines der Zahnräder (38b; 38c) des Radsatzes (36b; 36c) des weiteren Ganges (2.) als auf der Nebenwelle (94) laufendes Losrad ausgebildet und daß eine Kupplung (82c; 97) zum drehfesten Verbinden dieses Zahnrades (38b; 38c) mit der Nebenwelle (94) vorgesehen ist.

6. Getriebe nach Anspruch 5, **dadurch gekennzeichnet, daß** die Kupplung als mittels einer Schiebemuffe (96) betätigbare Schaltkupplung (97) ausgebildet ist.

7. Getriebe nach Anspruch 5, **dadurch gekennzeichnet, daß** die Kupplung als Reibungskupplung (82c) ausgebildet ist.

8. Getriebe nach einem oder mehreren der vorhergehenden Ansprüche, **dadurch gekennzeichnet, daß** alle Losräder (34, 46, 52, 58, 64, 70) auf der Getriebeausgangswelle (20) angeordnet sind.

9. Getriebe nach Anspruch 8, **dadurch gekennzeichnet, daß** ein Zahnrad (40) des Radsatzes (36) des weiteren Ganges (2.) als Festrad auf der Getriebeausgangswelle (20) angeordnet ist.

10. Getriebe nach Anspruch 8 oder 9, **dadurch gekennzeichnet, daß** die Radsätze (30, 36, 42, 48, 54, 60, 66) der Gänge (1., 2., 3., 4., 5., 6., R), vom Getriebeeingang her gesehen, in der Reihenfolge 5.-6.-2.-4.-3.-1.-R angeordnet sind.

11. Getriebe nach einem oder mehreren der Ansprüche 1 bis 7, **dadurch gekennzeichnet, daß** eine erste Anzahl von Losrädern (34, 58, 64, 70) auf der Getriebeausgangswelle (20) und eine zweite Anzahl von Losrädern (46a, 52a) auf der Vorgelegewelle (22) angeordnet sind.

12. Getriebe nach Anspruch 11, **dadurch gekennzeichnet, daß** die Radsätze (36, 42a) des weiteren Ganges (2.) und eines anderen Ganges (3.) ein Zahnrad (40/44a) gemeinsam haben.

13. Getriebe nach Anspruch 12, **dadurch gekennzeichnet, daß** das gemeinsame Zahnrad (40/44a) auf der Getriebeausgangswelle (20) sitzt.

14. Getriebe nach Anspruch 12 oder 13, **dadurch gekennzeichnet, daß** das gemeinsame Zahnrad (40/44a) als Festrad ausgebildet ist.

15. Getriebe nach einem oder mehreren der Ansprüche 11 bis 14, **dadurch gekennzeichnet, daß** die Radsätze (30, 36, 42, .48, 54, 60, 66) der Gänge (1., 2., 3., 4., 5., 6., R), vom Getriebeeingang her gesehen, in der Reihenfolge 5.-6.-2./3.-4.-1.-R angeordnet sind.

16. Getriebe nach einem oder mehreren der Ansprüche 1 bis 15, **dadurch gekennzeichnet, daß** zum Anfahren die Kupplungen (14, 82) des ersten (1.) und des zweiten (2.) Ganges gleichzeitig betätigbar sind.

## Claims

1. A motor vehicle stepped counter shaft transmission, comprising a transmission input shaft (16) drivable by an engine output shaft (12) via a separating clutch (14), a transmission output shaft (20) arranged collinearly with said transmission input shaft (16), and a counter shaft (22) arranged parallel to said transmission output shaft (20), a plurality of gearwheel sets (30, 36, 42, 48, 54, 60, 66) for establishing gears (1., 2., 3., 4., 5., 6., R) of said transmission (10), wherein gearwheel sets (30, 42, 48, 54, 60, 66) each comprise a loose wheel (34, 46, 52, 58, 64, 70), said loose wheels (34, 46, 52, 58, 64, 70) being arranged on a shaft (20; 22) and being adapted to be rigidly connected to said shaft (20; 22) by means of gearshift clutches (73, 74, 76, 77, 79, 80) for shifting into gears (1., 3., 4., 5., 6., R), wherein a gearwheel set (36) of a further gear (2.) being adapted to be shifted by means of a friction clutch (82), and wherein, eventually, for reducing a gearshift jolt when shifting from one gear to another, said friction clutch (82) is adapted to be closed when one of said gearshift clutches (73, 74, 76, 77, 79, 80) is being activated, wherein a toothed wheel (38) of said gearwheel set (36) of said further gear (2.) being arranged on an additional shaft (94) parallel to said transmission output shaft (20), and wherein a torque-transmitting connection from said engine output shaft (12) to said gearwheel set (36) of said further gear (2.) being establishable via said friction clutch (82), wherein said further gear is the second gear (2.), **characterized in that** said further gear (2.) is the only gear that can be shifted via said friction clutch (82).

2. The transmission of claim 1, **characterized in that** said separating clutch (14) and said friction clutch (82) are structurally integrated as a double clutch (84).

3. The transmission of claim 2, **characterized in that** said friction clutch (82) cooperates with a hollow shaft (86) of said double clutch, and wherein said hollow shaft (86) and said additional shaft (94) being interconnected via a gearwheel set (88).

4. The transmission of claim 1, **characterized in that** said friction clutch (82c) is arranged on said additional shaft (94), and is provided for connecting a toothed wheel (38c) of said gearwheel set (36c) of said further gear (2.), said toothed wheel (38c) being a loose wheel and being rotatably arranged on said additional shaft (94).

5. The transmission of any or multiple of claims 1 to 3, **characterized in that** one of said toothed wheels (38b; 38c) of said gearwheel set (36b; 36c) of said further gear (2.) is arranged as a loose wheel rotatably arranged on said additional shaft (94), and that a clutch (82c; 97) is provided, for rigidly connecting that toothed wheel (38b, 38c) with said additional shaft (94).

6. The transmission of claim 5, **characterized in that** said clutch is configured as a gearshift clutch (97) and is adapted to be actuated by means of a shift sleeve (96).

7. The transmission of claim 5, **characterized in that** said clutch is configured as a friction clutch (82c).

8. The transmission of one or multiple of the preceding claims, **characterized in that** all of said loose wheels (34, 46, 52, 58, 64, 70) are arranged on said transmission output shaft (20).

9. The transmission of claim 8, **characterized in that** a toothed wheel (40) of said gearwheel set (36) of said further gear (2.) is configured as a fixed wheel on said transmission output shaft (20).

10. The transmission of claim 8 or 9, **characterized in that** said gearwheel sets (30, 36, 42, 48, 54, 60, 66) of said gears (1., 2., 3., 4., 5., 6., R) are arranged in a sequence 5.-6.-2.-4.-3.-1.-R, as viewed from an input end of said transmission.

11. The transmission of one or multiple of claims 1 to 7, **characterized in that** a first plurality of loose wheels (34, 58, 64, 70) is arranged on said transmission output shaft (20) whereas a second plurality of loose wheels (46a, 52a) is arranged on said counter shaft (22).

12. The transmission of claim 11, **characterized in that** said gearwheel sets (36, 42a) of said further gear (2.) and of one further gear (3.) have one toothed wheel (40/44a) in common.

13. The transmission of claim 12, **characterized in that** said common toothed wheel (40/44a) is arranged on said transmission output shaft (20).

14. The transmission of claim 12 or 13, **characterized in that** said common toothed wheel (40/44a) is configured as a fixed wheel.

15. The transmission of one or multiple of claims 11 to 14, **characterized in that** said gearwheel sets (30, 36, 42, 48, 54, 60, 66) of said gears (1., 2., 3., 4., 5., 6., R) are arranged in a sequence 5.-6.-2./3.-4.-1.-R, as viewed from the input end of said transmission.

16. The transmission of one or multiple of claims 1 to 15, **characterized in that**, for starting said vehicle from stand still, said clutches (14, 82) of said first (1.) and said second (2.) gear are adapted to be activated simultaneously.

## Revendications

1. Boîte de vitesses à rapports étagés pour véhicule automobile, de type à renvoi avec un arbre primaire de boîte de vitesses (16) apte à être entraîné par un arbre de sortie du moteur (12) par l'intermédiaire d'un embrayage de séparation (14), avec un arbre secondaire de boîte de vitesses (20) agencé dans le prolongement de l'arbre primaire de boîte de vitesses (16), avec un arbre de renvoi (22) parallèle à l'arbre secondaire de boîte de vitesses (20), et avec une pluralité de trains d'engrenages (30, 36, 42, 48, 54, 60, 66) pour engager des rapports (1^{er}, 2^{ème}, 3^{ème}, 4^{ème}, 5^{ème}, 6^{ème}, marche arrière) de la boîte de vitesses (10), les trains d'engrenages (30, 42, 48, 54, 60, 66) comportant chacun un engrenage libre (34, 46, 52, 58, 64, 70) et les engrenages libres (34, 46, 52, 58, 64, 70) pouvant être reliés solidaires en rotation à un arbre (20 ; 22) les supportant par des éléments de liaison (73, 74, 76, 77, 79, 80) pour engager des rapports (1^{er}, 3^{ème}, 4^{ème}, 5^{ème}, 6^{ème}, MA), un train d'engrenages (36) d'un autre rapport (2^{ème}) pouvant être mis en prise par un embrayage à friction (82), et enfin l'embrayage à friction (82) pouvant être mis en prise par actionnement d'un des éléments de liaison (73, 74, 76, 77, 79, 80) pour atténuer l'à-coup lors d'un changement de vitesse, un engrenage (38) du train d'engrenages (36) de l'autre rapport (2^{ème}) étant agencé sur un arbre auxiliaire (94) parallèle à l'arbre secondaire de boîte de vitesses (20) et une liaison de couple pouvant être établie entre l'arbre de sortie du moteur (12) et le train d'engrenages (36) de l'autre rapport (2^{ème}) par l'intermédiaire de l'embrayage à friction (82), ledit autre rapport étant le second rapport (2^{ème}), **caractérisée en ce que** ledit autre rapport (2^{ème}) est le seul à pouvoir être engagé par l'intermédiaire de l'embrayage à friction (82).

2. Boîte de vitesses selon la revendication 1, **caractérisée en ce que** l'embrayage de séparation (14) et l'embrayage à friction (82) sont réunis de par leur conception en un embrayage double (84).

3. Boîte de vitesses selon la revendication 2, **caractérisée en ce que** l'embrayage à friction (82) agit sur un arbre creux (86) de l'embrayage double (84) et **en ce qu'**un train d'engrenages (88) relie l'arbre creux (86) à l'arbre auxiliaire (94).

4. Boîte de vitesses selon la revendication 1, **caractérisée en ce que** l'embrayage à friction (82c) est agencé sur l'arbre auxiliaire (94) et est prévu pour mettre en prise un engrenage (38c) du jeu d'engrenages (36c) de l'autre rapport (2^{ème}), ledit engrenage (38c) étant conçu sous la forme d'un engrenage libre et monté sur l'arbre auxiliaire (94).

5. Boîte de vitesses selon l'une ou plusieurs des revendications 1 à 3, **caractérisée en ce qu'**un des engrenages (38b ; 38c) du train d'engrenages (36b ; 36c) de l'autre rapport (2^{ème}) est conçu sous la forme d'un engrenage libre monté sur l'arbre auxiliaire (94) et **en ce qu'**un élément de liaison (82c ; 97) est prévu pour relier solidaires en rotation cet engrenage (38b ; 38c) et l'arbre auxiliaire (94).

6. Boîte de vitesses selon la revendication 5, **caractérisée en ce que** l'accouplement est conçu sous la forme d'un élément de liaison (97) actionnable au moyen d'un manchon coulissant (96).

7. Boîte de vitesses selon la revendication 5, **caractérisée en ce que** l'accouplement est conçu sous la forme d'un embrayage à friction (82c).

8. Boîte de vitesses selon une ou plusieurs des revendications précédentes, **caractérisée en ce que** tous les engrenages libres (34, 46, 52, 58, 64, 70) sont agencés sur l'arbre secondaire de boîte de vitesses (20).

9. Boîte de vitesses selon la revendication 8, **caractérisée en ce qu'**un engrenage (40) du train d'engrenages (36) de l'autre rapport (2^{ème}) est agencé sous la forme d'un engrenage fixe sur l'arbre secondaire de boîte de vitesses (20).

10. Boîte de vitesses selon la revendication 8 ou 9, **caractérisée en ce que** les trains d'engrenages (30, 36, 42, 48, 54, 60, 66) des rapports (1^{er}, 2^{ème}, 3^{ème}, 4^{ème}, 5^{ème}, 6^{ème}, MA), vus depuis l'entrée de la boîte de vitesses, sont agencés dans l'ordre suivant : 5^{ème}, 6^{ème}, 2^{ème}, 4^{ème}, 3^{ème}, 1^{er}, MA.

11. Boîte de vitesses selon une ou plusieurs des revendications 1 à 7, **caractérisée en ce qu'**un premier ensemble d'engrenages libres (34, 58, 64, 70) est agencé sur l'arbre secondaire de boîte de vitesses (20) et un second ensemble d'engrenages libres (46a, 52a) est agencé sur l'arbre de renvoi (22).

12. Boîte de vitesses selon la revendication 11, **caractérisée en ce que** les trains d'engrenages (36, 42a) de l'autre rapport (2^{ème}) et d'un autre rapport (3^{ème}) ont un engrenage commun (40/44a).

13. Boîte de vitesses selon la revendication 12, **caractérisée en ce que** l'engrenage commun (40/44a) se trouve sur l'arbre secondaire de boîte de vitesses (20).

14. Boîte de vitesses selon la revendication 12 ou 13, **caractérisée en ce que** l'engrenage commun (40/44a) est conçu sous la forme d'un engrenage fixe.

15. Boîte de vitesses selon une ou plusieurs des revendications 11 à 14, **caractérisée en ce que** les trains d'engrenages (30, 36, 42, 48, 54, 60, 66) des rapports (1^{er}, 2^{ème}, 3^{ème}, 4^{ème}, 5^{ème}, 6^{ème}, MA) sont agencés, vus depuis l'entrée de la boîte de vitesses, dans l'ordre suivant : 5^{ème}, 6^{ème}, 2^{ème}/3^{ème}, 4^{ème}, 1^{er}, MA.

16. Boîte de vitesses selon une ou plusieurs des revendications 1 à 15, **caractérisée en ce qu'**au démarrage, les embrayages (14, 82) du premier (1^{er}) et du deuxième (2^{ème}) rapport peuvent être actionnés simultanément.
